# EUROPÄISCHE PATENTSCHRIFT

(11) **EP 3 844 454 B1**
(45) Veröffentlichungstag und Bekanntmachung des Hinweises auf die Patenterteilung: **28.01.2026**
(21) Anmeldenummer: 19753264.1
(22) Anmeldetag: 30.07.2019
(51) Int. Cl.: G01B 11/25, G01B 11/255

(54) **VERFAHREN ZUR BESTIMMUNG DER KRÜMMUNG EINER GLASSCHEIBE, INSBESONDERE EINER WINDSCHUTZSCHEIBE**
METHOD FOR DETERMINING THE CURVATURE OF A GLASS PANE, MORE PARTICULARLY A WINDSCREEN PANE
PROCÉDÉ DE DÉTERMINATION DE LA COURBURE D'UNE PLAQUE DE VERRE, EN PARTICULIER D'UN PARE-BRISE

(30) Priorität: 31.08.2018 DE 102018121337
(43) Veröffentlichungstag der Anmeldung: 07.07.2021
(73) Patentinhaber: Nokra Optische Prüftechnik und Automation GmbH, 52499 Baesweiler (DE)
(72) Erfinder: LAUVEN, Günter, 52074 Aachen (DE)
(74) Vertreter: Keenway Patentanwälte Neumann Heine Taruttis
(86) Internationale Anmeldenummer: PCT/EP2019/070424
(87) Internationale Veröffentlichungsnummer: WO 2020/043411

(56) Entgegenhaltungen:
- EP-B1- 3 635 330
- DE-A1- 10 045 105
- DE-A1- 102006 013 584
- US-A- 5 726 749
- US-A1- 2016 202 039
- US-A1- 2016 379 379

## Beschreibung

Gegenstand der vorliegenden Erfindung ist ein Verfahren zur Bestimmung der Krümmung einer Glasscheibe, ein Verfahren zur Bestimmung der Krümmung einer Windschutzscheibe und ein Verfahren zur Überwachung des Produktionsprozesses einer Windschutzscheibe mittels einem der vorbezeichneten Verfahren.

Glasscheiben, insbesondere Windschutzscheiben, werden industriell hergestellt beispielsweise durch ein schwerkraftbetriebenes Formungsverfahren, bei dem ein entsprechender Rohling erwärmt wird und im erwärmten Zustand sich durch die Gravitationswirkung in eine Form einlegt oder durch ein Verfahren bei dem ein oder mehrere erhitzte Rohlinge durch ein Pressverfahren geformt werden. Insbesondere bei Windschutzscheiben werden diese mehr und mehr neben ihrer ursprünglichen Funktion des Schutzes der Insassen eines Kraftfahrzeuges vor dem Fahrtwind auch zu anderen Funktionen eingesetzt. Beispielsweise ist es bekannt, ein sogenanntes Head Up Display einzusetzen, bei dem Informationen in die Windschutzscheibe projiziert und durch eine entsprechende Reflexion vom Fahrer wahrgenommen werden können. Weiterhin werden Windschutzscheiben auch zur Befestigung von Sensoren, insbesondere auch von Kameras eingesetzt. Hierdurch ergeben sich hohe Anforderungen an die optische Qualität was die Transmission oder Reflexion von Licht betrifft. Neben der Parität des Glases, insbesondere im Hinblick auf Einschlüsse o. ä., ist insbesondere die Form der Windschutzscheibe von hoher Bedeutung für die Erfüllung dieser hohen Anforderungen. Von daher ist die Bestimmung der Krümmung einer Windschutzscheibe von immer größerer Bedeutung.

Hierzu ist es aus dem Stand der Technik bekannt, mit drei als Punktsensoren ausgebildeten Triangulationssensoren Krümmungsdaten auf drei Linien entlang der Windschutzscheibe aufzunehmen. Der Begriff Punktsensor wird dabei so verstanden, dass grundsätzlich Daten eines Punktes der Windschutzscheibe aufgenommen werden. Durch eine Relativbewegung zwischen Punktsensor und Windschutzscheibe kommt es daher zur Aufnahme der Daten einer Linie der Windschutzscheibe. Der Triangulationssensor bestimmt grundsätzlich einen Abstand, der durch eine Kalibrierung, beispielsweise der Position des Triangulationssensors relativ zu einer Ebene, auf der die Windschutzschreibe aufliegt, eine Positionsdatenkurve liefert, aus der sich die Krümmung der Windschutzscheibe in diesem Bereich bestimmen lässt.

Durch die sich stetig erhöhenden Anforderungen an die Präzision der Krümmung der Windschutzscheibe genügen die dadurch gewonnenen Daten bestimmten Anforderungen nicht mehr.

Verfahren zur Vermessung von Oberflächen sind aus der US 2016/379379 A1, der DE 100 45 105 A1, der US 2016/202039 A1, EP 3 635 330 B1 und der US 5,726,749 A bekannt. Keines dieser Verfahren löst die beschriebenen Probleme auf zufriedenstellende Weise.

Von daher liegt ausgehend von den aus dem Stand der Technik bekannten Nachteile der vorliegenden Erfindung die Aufgabe zugrunde, ein verbessertes Verfahren zur Bestimmung der Krümmung einer Glasscheibe anzugeben.

Diese Aufgabe wird gelöst mit den Merkmalen des unabhängigen Anspruchs. Abhängige Ansprüche sind auf vorteilhafte Weiterbildungen gerichtet. Es ist darauf hinzuweisen, dass die in den abhängigen Patentansprüchen einzeln aufgeführten Merkmale in beliebiger, technologisch sinnvoller Weise miteinander kombiniert werden können und weitere Ausgestaltungen der Erfindung definieren. Darüber hinaus werden die in den Patentansprüchen angegebenen Merkmale in der Beschreibung näher präzisiert und erläutert, wobei weitere bevorzugte Ausgestaltungen der Erfindung dargestellt werden.

Das erfindungsgemäße Verfahren zur Bestimmung der Krümmung mindestens einer Glasscheibe, bei dem die mindestens eine Glasscheibe und eine Sensoreinrichtung relativ zueinander in einer Bewegungsrichtung bewegbar sind und die Sensoreinrichtung mindestens drei Triangulationssensoren aufweist, die jeweils eine Lichtemissionseinheit, die jeweils Licht auf die mindestens eine Glasscheibe emittiert, und eine Lichtdetektionseinheit, die das von der mindestens einen Glasscheibe gestreute Licht detektiert, aufweisen, so dass durch die Triangulationssensoren Positionsdaten von der mindestens einen Glasscheibe aufgenommen werden, die die mindestens eine Glasscheibe in Bewegungsrichtung abdecken, wobei die Triangulationssensoren in einer Querrichtung quer zur Bewegungsrichtung unterschiedliche Positionen aufweisen mit einem inneren Triangulationssensor und mindestens zwei in Querrichtung außerhalb des inneren Triangulationssensors ausgebildeten äußere Triangulationssensoren aufweist, zeichnet sich dadurch aus, dass durch die äußeren Triangulationssensoren Positionsdaten von jeweils mindestens zwei Positionen in Querrichtung aufgenommen werden.

Das erfindungsgemäße Verfahren findet insbesondere Anwendung auf einzelne Glasscheiben, sogenannte Singlets, aber auch auf mehrere Glasscheiben, die beispielsweise ineinander liegen. Insbesondere zwei ineinander liegende Glasscheiben werden als Doublet bezeichnet. Insbesondere Windschutzscheiben werden regelmäßig aus mehreren Glasscheiben hergestellt, die miteinander verbunden werden. Im Rahmen des Produktionsprozesses sind solche Glasscheiben regelmäßig durch eine Pulverschicht getrennt, werden jedoch gemeinsam geformt und dann dem weiteren Produktionsprozess unterzogen, in dessen Verlauf sie miteinander verbunden werden. Weiterhin existieren auch sogenannte laminierte Windschutzscheiben, bei denen zwei oder mehrere Singlets miteinander verbunden werden.

Grundsätzlich wird zwischen zwei Glasscheiben zur Bildung einer Windschutzscheibe vor oder bei der Verbindung dieser Scheiben eine Folie zwischen den Scheiben oder auf einer der Scheiben ausgebildet. Hierdurch wird einerseits eine Trennung der Scheiben erreicht, andererseits können hierdurch weitere Funktionalitäten wie z.B. ein Splitterschutz ausgebildet werden.

Unter einem Triangulationssensor wird ein laserbasierter Abstandssensor verstanden, der Abstände zu einer Referenz berührungslos mit hoher Genauigkeit misst. Durch die Lichtemissionseinheit, eine Laserquelle, wird ein Laserstrahl auf das Meßobjekt projiziert und das gestreute Licht unter einem schrägen Betrachtungswinkel durch die Lichtempfängereinheit, die üblicherweise einen entsprechend ausgebildeten lichtempfindlichen Chip, wie beispielsweise einen CCD Chip, enthält, abgebildet. Über eine entsprechende Auswertung der erhaltenen Meßsignale werden so Positionsdaten gewonnen, die den Abstand einer streuenden Grenzfläche oder eines streuenden Objektes zur Referenz präzise darstellen. Wird eine bestimmte Grenzfläche festgelegt, so besteht dadurch die Möglichkeit, auch Dicken zu messen. Die entsprechende Dicke wird also als die Differenz zweier Abstände bestimmt.

Die Messung liefert Positionsdaten, die es erlauben, eine Krümmung der Glasscheibe an der Position des entsprechenden Triangulationssensors in Querrichtung zu bestimmen. Für jede Position (in Querrichtung) eines Triangulationssensors wird somit ein Datensatz erhalten, der zweidimensional den Abstand der jeweiligen Grenzfläche gegen eine Position in Bewegungsrichtung darstellt. Hierdurch kann somit an der Position in Querrichtung die Kontur der Glasscheibe in Bewegungsrichtung bestimmt werden.

Erfindungsgemäß werden durch die äußeren Triangulationssensoren Positionsdaten von jeweils mindestens zwei Positionen in Querrichtung aufgenommen. Hierdurch kann die Glasscheibe folglich genauer vermessen werden als bei aus dem Stand der Technik bekannten Verfahren. Dies kann dabei mit geringem Aufwand erreicht werden. Beispielsweise können zumindest die äußeren Triangulationssensoren in Querrichtung bewegt werden, beispielsweise kann an drei bestimmten Position in Querrichtung die Aufnahme von Positionsdaten erfolgen, vorteilhafter Weise über die gesamte Länge der Glasscheibe in Bewegungsrichtung, worauf eine Verschiebung zumindest der äußeren Triangulationssensoren (oder der gesamten Sensoreinrichtung) in Querrichtung und daran anschließend eine erneute Aufnahme von Positionsdaten in Längsrichtung erfolgt. Alternativ oder zusätzlich ist es möglich, statt jeweils einem äußeren Triangulationssensor jeweils mehr als einen Triangulationssensor auszubilden, beispielsweise zwei oder drei. Alternativ oder zusätzlich kann mindestens einer der Triangulationssensoren als Liniensensor ausgebildet werden, der über eine bestimmte Länge in Querrichtung Daten aufnimmt.

Bevorzugt sind Ausgestaltungen mit einem als Punktsensor ausgestalteten inneren Triangulationssensor und jeweils zwei oder drei als Punktsensoren ausgestalteten äußeren Triangulationssensoren. Weiterhin bevorzugt ist eine Ausgestaltung mit einem als Punkt- oder Liniensensor ausgestalteten inneren Triangulationssensor und äußeren Triangulationssensoren, die als Liniensensor ausgestaltet sind.

Bevorzugt nimmt der innere Triangulationssensor Positionsdaten von ausschließlich einer Position in Querrichtung auf.

Hierbei ist also der innere Triangulationssensor als Punktsensor ausgebildet. Wie unter Bezugnahme auf die Figuren gezeigt wird, nimmt ein solcher Punktsensor einen zweidimensionalen Datensatz als Messsignal auf, aus dem die entsprechende(n) Position(en) einer oder mehrerer Grenzflächen bestimmt werden kann.

Diese Ausgestaltung erlaubt insbesondere die einfache Nachrüstung von bestehenden Anlagen, die häufig bereits einen oder mehrere Punktsensoren aufweisen.

Gemäß einer vorteilhaften Ausgestaltung umfasst das Verfahren weiterhin die folgenden Schritte:
i) Festlegen einer ersten Position der Triangulationssensoren in Querrichtung;
ii) Relativbewegung zwischen Sensoreinrichtung und Glasscheibe in Bewegungsrichtung, dabei Aufnahme von Positionsdaten durch die Triangulationssensoren;
iii) Einstellen einer von der ersten Position unterschiedlichen zweiten Position in Querrichtung zumindest der äußeren Triangulationssensoren;
iv) Relativbewegung zwischen Sensoreinrichtung und Glasscheibe in Bewegungsrichtung, dabei Aufnahme von Positionsdaten durch zumindest die äußeren Triangulationssensoren.

Insbesondere stellen also die Relativbewegungen gemäß Schritt ii) und iv) eine Hin- und Herbewegung in Bewegungsrichtung dar. Somit können mit einem einzelnen Triangulationssensor durch zwei Relativbewegungen in Bewegungsrichtung zwei Positionsdatensätze von zwei Positionen in Querrichtung aufgenommen werden, in dem der entsprechende Triangulationssensor zwischen den Relativbewegungen in Querrichtung bewegt wird. Hierdurch kann bei identischer Zahl der Triangulationssensoren die Anzahl der Positionen in Querrichtung, an denen die Krümmung bestimmt wird, verdoppelt werden.

Bevorzugt ist in diesem Zusammenhang allgemein, dass mindestens einer der äußeren Triangulationssensoren während der Erfassung von Positionsdaten zumindest zeitweise in Querrichtung bewegt wird.

So können komplexe Pfade auf der zu messenden Glasscheibe befahren werden, so dass es in einer Messung möglich ist, exakt definierte Bereiche der Glasscheibe im Hinblick auf ihre Krümmung zu vermessen.

Gemäß einer vorteilhaften Ausgestaltung sind jeweils zwei oder mehr äußere Triangulationssensoren auf einer Seite des inneren Triangulationssensors ausgebildet.

Dies erlaubt parallel die Aufnahme von Positionsdaten an mehreren Positionen in Querrichtung durch die äußeren Triangulationssensoren.

Gemäß einer vorteilhaften Ausgestaltung nimmt mindestens einer der folgenden Triangulationssensoren:
a) der innere Triangulationssensor; und
b) mindestes einer der äußeren Triangulationssensoren
Positionsdaten von mehreren Positionen in Querrichtung gleichzeitig auf.

Dies kann insbesondere dadurch erreicht werden, dass der entsprechende Sensor als so genannter Liniensensor ausgeführt wird, der gleichzeitig Daten auf einer Linie des Meßobjektes aufnimmt. Hierdurch entsteht durch die Streuung ein dreidimensionales Messsignal, aus welchem die Lage der entsprechende(n) Grenzfläche(n) abgelesen werden kann.

Besonders bevorzugt ist in diesem Zusammenhang, dass mindestens einer der folgenden Triangulationssensoren:
a) der innere Triangulationssensor; und
b) mindestes einer der äußeren Triangulationssensoren
als Liniensensor ausgebildet ist, dessen Lichtemissionseinheit Licht in einer Linie quer zur Bewegungsrichtung emittiert.

Somit nimmt der entsprechende Triangulationssensor gleichzeitig Daten von mehreren Positionen in Querrichtung auf. Es ist bevorzugt möglich, aus diesen Daten die Positionsdaten und damit die Krümmung der Glasscheibe für bestimmte Positionen in Querrichtung zu extrahieren, so dass die entsprechende Betrachtung auf die Bereiche der Glasscheibe beschränkt werden kann, die besonders relevant sind.

Weiterhin wird ein Verfahren zur Bestimmung der Krümmung einer Windschutzscheibe vorgeschlagen, wobei zumindest ein Element einer Windschutzscheibe nach dem Formprozess einem erfindungsgemäßen Verfahren unterzogen wird.

Dies bedeutet insbesondere, dass bei Windschutzscheiben, die aus mehreren Glasscheiben aufgebaut werden, einzelne Glasscheiben vermessen werden oder aber mehrere oder sogar alle Glasscheiben, aus denen die Windschutzscheibe aufgebaut wird, gleichzeitig vermessen werden. Die Triangulationssensoren liefern in einem solchen Fall Messdaten von jeder Grenzfläche, die vorliegt, insbesondere liegen also Positionsdatensätze für die verschiedenen Grenzflächen vor, die entsprechend betrachtet und ausgewertet werden können.

Das beschriebene Verfahren wird insbesondere unmittelbar im Anschluss des Formprozesses der Glasscheibe eingesetzt, jedoch ist es alternativ oder zusätzlich auch möglich, die Krümmung der mindestens einen Glasscheibe, insbesondere einer Windschutzscheibe, zu anderen Zeitpunkten/Orten des Produktionsprozesses zu überwachen.

In diesem Zusammenhang wird ein Verfahren zur Überwachung des Produktionsprozesses einer Windschutzscheibe vorgeschlagen, wobei die Krümmung zumindest eines Elements einer Windschutzscheibe zu mindestens zwei Zeitpunkten nach einem erfindungsgemäßen Verfahren bestimmt wird und die erhaltenen Krümmungsdaten vorgehalten werden und die Krümmungsdaten zur Überwachung des Produktionsprozesses miteinander korreliert werden.

Unter Korrelation werden insbesondere auch der Vergleich mit einem Normdatensatz und/oder der Vergleich der Veränderung zwischen den Datensätzen verstanden. Unter einem Element sind hierbei insbesondere eine Glasscheibe zu verstehen, aus denen die Windschutzscheibe aufgebaut ist oder auch alle Glasscheiben, die im Rahmen des Produktionsprozesses zur Windschutzscheibe zusammengefügt werden. Durch diese Korrelation der Krümmungsdaten können Fehlentwicklungen in der Fertigung von Windschutzscheiben einfach festgestellt werden, da Änderungen oder Fehler, die sich auf die Krümmung der Elemente auswirken, unmittelbar detektiert werden. So können beispielsweise Schäden in den Produktionsanlagen direkt festgestellt werden.

Die Erfindung sowie das technische Umfeld werden nachfolgend anhand der Figuren näher erläutert. Es ist darauf hinzuweisen, dass die Erfindung durch die gezeigten Ausführungsbeispiele nicht beschränkt werden soll, da der Schutzumfang der Erfindung durch die angehängten Ansprüche bestimmt wird. Insbesondere ist es, soweit nicht explizit anders dargestellt, auch möglich, Teilaspekte der in den Figuren erläuterten Sachverhalte zu extrahieren und mit anderen Bestandteilen und/oder Erkenntnissen aus anderen Figuren und/oder der vorliegenden Beschreibung zu kombinieren. Es zeigen schematisch:
- Fig. 1: ein Beispiel einer Sensoreinrichtung zur Bestimmung der Krümmung mindestens einer Glasscheibe;
- Fig. 2: eine Erläuterung des Messprinzips;
- Fig. 3 bis 5: Beispiele von Verfahrensführungen zur Messung der Krümmung mindestens einer Glasscheibe; und
- Fig. 6: ein weiteres Beispiel einer Sensoreinrichtung mit entsprechender Verfahrensführung zur Messung der Krümmung mindestens einer Glasscheibe.

Im Folgenden werden mehrere Messverfahren zur Messung der Krümmung mindestens einer Glasscheibe beschrieben. Hierbei sind jeweils gleiche Elemente mit gleichen Bezugszeichen versehen.

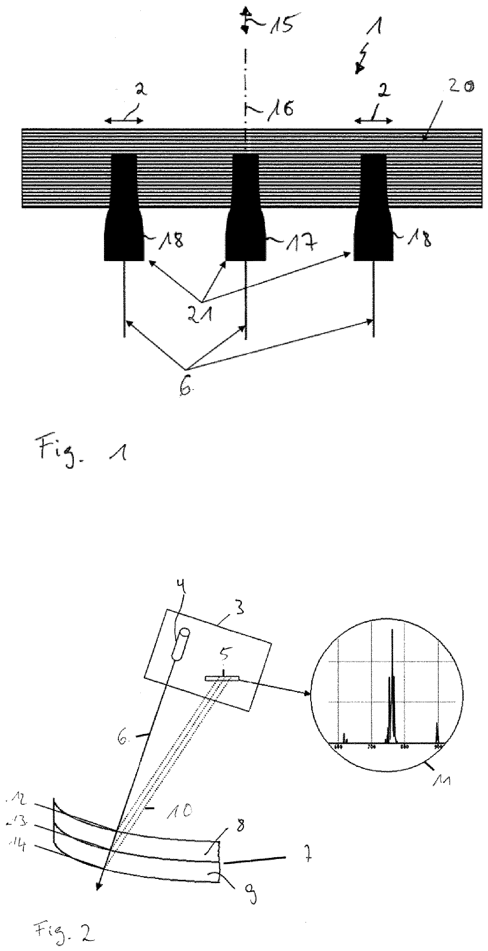

Fig. 1 zeigt schematisch ein Beispiel einer Sensoreinrichtung 1 zur Bestimmung der Krümmung mindestens einer Glasscheibe. Die Vorrichtung 1 weist einen Meßarm 20 auf, an dem Sensorhalter 21 montiert sind, die in einer Querrichtung 2 bewegbar sind. In oder an jedem Sensorhalter 21 ist mindestens ein Triangulationssensor aufgenommen, der mit Bezug auf Figur 2 näher beschrieben wird. Der Triangulationssensor im jeweiligen Sensorhalter 21 emittiert dabei einen Laserstrahl 6 auf eine Oberfläche, deren Abstand vom Meßarm 20 und/oder einer definierten Referenzebene zu bestimmen ist.

Fig. 2 zeigt schematisch einen Triangulationssensor 3, der eine Lichtemissionseinheit 4 und eine Lichtdetektionseinheit 5 umfasst. Die Lichtemissionseinheit 4 emittiert dabei einen Laserstrahl 6 in Richtung der zu messenden Oberfläche. Hierbei ist der Laserstrahl 6 auf eine Windschutzscheibe 7 gerichtet, die aus einer ersten Glasscheibe 8 und einer zweiten Glasscheibe 9 besteht. Hierbei wird der Lichtstrahl gestreut und als gestreuter Lichtstrahl 10 in Richtung der Lichtdetektionseinheit 5 gestreut, in der es zur Aufnahme eines Meßsignals 11 kommt, welches beispielhaft gezeigt ist. Dieses Meßsignal 11 weist mehrere Peaks auf, die insbesondere aus den Signalen an den Grenzflächen der einzelnen Glasscheiben 8,9 stammen. Der Laserstrahl 6 passiert zunächst eine erste Grenzfläche 12 zwischen der Umgebungsluft und der ersten Glasscheibe 8, dann eine zweite Grenzfläche 13 zwischen der ersten Glasscheibe 8 und der zweiten Glasscheibe 9, sowie eine dritte Grenzfläche 14 zwischen der zweiten Glasscheibe 9 und der Umgebungsluft. Durch die Streuung des Lichts entsteht im Meßsignal 11 ein Spektrum mit unterschiedlichen Peaks, die den einzelnen Grenzflächen zugeordnet werden können.

Dadurch lassen sich Abstände der Grenzflächen 12, 13, 14 von einer kalibrierten Referenzebene, beispielsweise aufgespannt durch den Meßarm 20 und den Vektor der Bewegungsrichtung 15 einer Relativbewegung zwischen Meßarm 20 und Glasscheibe 8. 9, bestimmen. Durch die Kenntnis der Abstände der Grenzflächen 12, 13, 14 von der Referenzebene an der Position, an der der Laserstrahl 6 auf die Grenzfläche 12, 13, 14 auftrifft und die Korrelation dieser Abstände miteinander lassen sich so die Dicken der ersten Glasscheibe 8 und der zweiten Glasscheibe 9 bestimmen.

Unter erneuter Bezugnahme auf Figur 1 wird nun beschrieben, wie die Sensoreinrichtung 1 aus Figur 1 entsprechend für die Bestimmung der Krümmung der Windschutzscheibe 7 eingesetzt werden kann. Hierzu wird eine Relativbewegung zwischen dem Meßarm 20 und der Windschutzscheibe 7 in einer Bewegungsrichtung 15 bewirkt, indem die Sensoreinrichtung 1 relativ zur Windschutzscheibe 7 bewegt wird und/oder die Windschutzscheibe 7 relativ zur Sensoreinrichtung 1 bewegt wird. Hierbei wird üblicherweise ein innerer Triangulationssensor 15 auf eine Mittelachse 16 der Windschutzscheibe 7 ausgerichtet. Dadurch werden durch den inneren Triangulationssensor 17 Positionsdaten der Mittelachse 16 der Windschutzscheibe 7 erfasst.

Weiterhin sind zwei äußere Triangulationssensoren 18 ausgebildet, die im Vergleich zum inneren Triangulationssensor 17 außen liegen, also am Meßarm 20 außerhalb des inneren Triangulationssensors 17 ausgebildet sind, so dass der innere Triangulationssensor 17 zwischen den äußeren Triangulationssensoren 18 liegt. Durch die äußeren Triangulationssensoren 18 können Positionsdaten von Bereichen außerhalb der Mittelachse 16 der Windschutzscheibe 7 erfasst werden, beispielsweise von Bereichen, die nach Einbau der Windschutzscheibe 7 im Blickfeld des Fahrers oder des Beifahrers liegen. Insbesondere in Situationen, in denen es immer mehr auf eine möglichst präzise Kontur der Windschutzscheibe 7 ankommt, sind entsprechende Messverfahren unzureichend, da immer mehr Bereiche der Windschutzscheibe 7 funktionalisiert werden, beispielsweise für so genannte "Head Up Displays", in denen Informationen in die Windschutzscheibe 7 projiziert werden, so dass der Fahrer die Reflektion der Informationen in der Windschutzscheibe 7 sieht, oder durch Ausbildung von Sensoren oder ähnlichem.

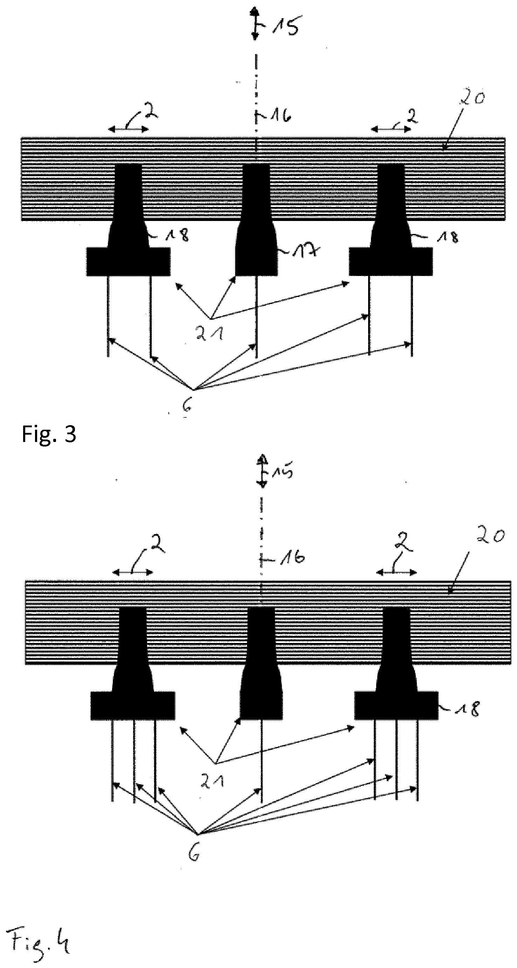

Von daher wird nunmehr unter Bezugnahme auf Figur 3 ein weiteres Messverfahren beschrieben. Es werden nur die Unterschiede zu dem obig beschriebenen Verfahren diskutiert, darüber hinaus wird auf die oben gemachten Ausführungen verwiesen. Hier weist der Meßarm 20 ebenfalls drei Sensorträger 21 auf, jedoch weisen die entsprechenden äußeren Sensorträger 21 jeweils zwei äußere Triangulationssensoren 18 auf. Hierdurch wird die Zahl der durch die entsprechenden Triangulationssensoren emittierten Laserstrahlen 6 erhöht. Dadurch können bei einer einmaligen Relativbewegung zwischen Windschutzscheibe 7 und Meßarm 20 Positionsdaten von mehreren Meßbahnen, also an mehreren Positionen in Querrichtung 2, erfasst werden, sodass die Qualität der Krümmungsmessung auf einfache Art und Weise verbessert wird.

Figur 4 zeigt ein weiteres Beispiel eines Messverfahrens, bei dem im Unterschied zu dem im Zusammenhang mit Figur 3 offenbarten Verfahrens entsprechend jeweils drei äußere Triangulationssensoren 18 an den jeweiligen Sensorträgern 21 ausgebildet sind. Dadurch werden im Bereich der äußeren Triangulationssensoren 18 jeweils dreifach mehr Positionsdaten erfasst als im Beispiel aus Figur 1.

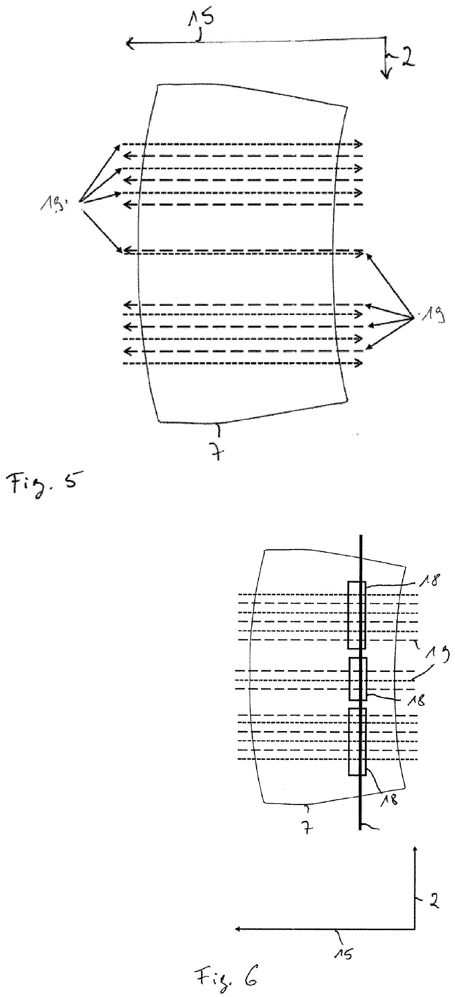

Fig. 5 zeigt eine alternative Verfahrensführung am Beispiel der Verfahrensführung aus Fig. 4, die jedoch auch mit den Verfahrensführungen aus Fig. 2 bis 3 kombinierbar ist. Es werden nur die Unterschiede zu dem obig beschriebenen Verfahren diskutiert, darüber hinaus wird auf die oben gemachten Ausführungen verwiesen. Hierbei wird im Vergleich zu den oben beschriebenen Verfahrensführungen die Relativbewegung zwischen Windschutzscheibe 7 und Meßarm 20 modifiziert, in dem zunächst eine erste Relativbewegung in Bewegungsrichtung 15, dann eine Relativbewegung in Querrichtung 2 quer zur Bewegungsrichtung 15 und dann eine dritte Relativbewegung entgegen der Bewegungsrichtung 15 erfolgt. Zumindest während der ersten und dritten Relativbewegung erfolgt dabei eine Aufnahme von Positionsdaten über die entsprechenden Triangulationssensoren 17, 18. Windschutzscheibe 7 und Meßarm 20 werden also relativ zu einander hin und herbewegt. Dies kann durch eine entsprechende Bewegung der Windschutzscheibe 7 und/oder durch eine entsprechende Bewegung des Meßarms 20 erfolgt. Durch ein solches Vorgehen wird die Menge der aufgenommenen Daten im Vergleich zu den Verfahrensführungen gemäß Fig. 2 bis 4 verdoppelt, insbesondere wird die Anzahl der aufgenommenen Spuren 19, das heißt der Positionsdaten an einer bestimmten Position in Querrichtung 2, auf einfache Art und Weise verdoppelt.

Mit der hier beschriebenen Verfahrensführung kann insbesondere ein Bereich genauer vermissen werden, der im späteren Betrieb beispielsweise als Projektionsfläche für ein sogenanntes Head Up Display dient. Gerade hier ist eine präzise definierte Krümmung der Windschutzscheibe 7 besonders wichtig, da die Krümmung der Windschutzscheibe 7 und deren Präzision in diesem Bereich eint möglichst unverfälschte Darstellung der im Head Up Display zu sehenden Daten ermöglicht und Abweichungen leicht dazu führen, dass die Windschutzscheibe 7 nicht verwendet werden kann.

Fig. 6 zeigt ein Beispiel, bei dem am Meßarm 20 drei Liniensensoren als Triangulationssensoren 17, 18 ausgebildet sind. Diese Liniensensoren nehmen dabei statt Daten von einem einzelnen Punkt Daten von einer Linie auf. Eine solche Verfahrensführung erlaubt es, aus den durch die Triangulationssensoren 17, 18 gewonnenen Daten einzelne Spuren 19 (die hier nur beispielhaft dargestellt sind) auszuwählen, deren Krümmung gemessen werden soll. Hierbei werden dann die entsprechenden Positionsdaten aus den insgesamt durch den entsprechenden Triangulationssensor 17, 18 gewonnenen Positionsdaten extrahiert. Grundsätzlich können die Triangulationssensoren 17, 18 so ausgebildet werden, dass die die Windschutzscheibe 7 vollständig in Querrichtung 2 erfassen.

### Bezugszeichenliste

- 1: Sensoreinrichtung
- 2: Querrichtung
- 3: Triangulationssensor
- 4: Lichtemissionseinheit
- 5: Lichtdetektionseinheit
- 6: Laserstrahl
- 7: Windschutzscheibe
- 8: erste Glasscheibe
- 9: zweite Glasscheibe
- 10: Lichtstrahl
- 11: Meßsignal
- 12: erste Grenzfläche
- 13: zweite Grenzfläche
- 14: dritte Grenzfläche
- 15: Bewegungsrichtung
- 16: Mittelachse
- 17: innerer Triangulationssensor
- 18: äußerer Triangulationssensor
- 19: Spur
- 20: Meßarm
- 21: Sensorhalter

## Patentansprüche

1. Verfahren zur Bestimmung der Krümmung mindestens einer Glasscheibe (7, 8, 9),
bei dem die mindestens eine Glasscheibe (7, 8, 9) und eine Sensoreinrichtung (1) relativ zueinander in einer Bewegungsrichtung (15) bewegbar sind und die Sensoreinrichtung (1) mindestens drei Triangulationssensoren (3, 17, 18) aufweist, die jeweils eine Lichtemissionseinheit (4), die jeweils einen Laserstrahl (6) auf die mindestens eine Glasscheibe (7, 8, 9) emittiert, und eine Lichtdetektionseinheit (5), die das von der mindestens einen Glasscheibe (7, 8, 9) gestreute Licht detektiert, aufweisen, so dass durch die Triangulationssensoren (3, 17, 18) Positionsdaten von der mindestens einen Glasscheibe (7, 8, 9) aufgenommen werden, die die mindestens eine Glasscheibe (7, 8, 9) in Bewegungsrichtung (15) abdecken,
wobei die Triangulationssensoren (3, 17, 18) in einer Querrichtung (2) quer zur Bewegungsrichtung (15) unterschiedliche Positionen aufweisen mit einem inneren Triangulationssensor (17) und mindestens zwei in Querrichtung (2) außerhalb des inneren Triangulationssensors (17) ausgebildeten äußere Triangulationssensoren (18) aufweist, **dadurch gekennzeichnet, dass** durch die äußeren Triangulationssensoren (18) Positionsdaten von jeweils mindestens zwei Positionen in Querrichtung (2) aufgenommen werden.

2. Verfahren nach Anspruch 1, bei dem der innere Triangulationssensor (17) Positionsdaten von ausschließlich einer Position in Querrichtung (2) aufnimmt.

3. Verfahren nach einem der vorhergehenden Ansprüche, umfassend die folgenden Schritte:
i) Festlegen einer ersten Position der Triangulationssensoren (17, 18) in Querrichtung (2);
ii) Relativbewegung zwischen Sensoreinrichtung (1) und Glasscheibe (7, 8, 9) in Bewegungsrichtung (15), dabei Aufnahme von Positionsdaten durch die Triangulationssensoren (17, 18);
iii) Einstellen einer von der ersten Position unterschiedlichen zweiten Position in Querrichtung (2) zumindest der äußeren Triangulationssensoren (18);
iv) Relativbewegung zwischen Sensoreinrichtung (1) und Glasscheibe (7, 8, 9) in Bewegungsrichtung (15), dabei Aufnahme von Positionsdaten durch zumindest die äußeren Triangulationssensoren (17, 18).

4. Verfahren nach einem der vorhergehenden Ansprüche, bei dem mindestens einer der äußeren Triangulationssensoren (18) während der Erfassung von Positionsdaten zumindest zeitweise in Querrichtung (2) bewegt wird.

5. Verfahren nach einem der vorhergehenden Ansprüche, bei dem jeweils zwei oder mehr äußere Triangulationssensoren (18) auf einer Seite des inneren Triangulationssensors (17) ausgebildet sind.

6. Verfahren nach einem der vorhergehenden Ansprüche, bei dem mindestens einer der folgenden Triangulationssensoren:
a) der innere Triangulationssensor (17); und
b) mindestes einer der äußeren Triangulationssensoren (18) Positionsdaten von mehreren Positionen in Querrichtung (2) gleichzeitig aufnimmt.

7. Verfahren nach Anspruch 6, bei dem mindestens einer der folgenden Triangulationssensoren:
a) der innere Triangulationssensor (17); und
b) mindestes einer der äußeren Triangulationssensoren (18)
als Liniensensor ausgebildet ist, dessen Lichtemissionseinheit (4) Licht in einer Linie quer zur Bewegungsrichtung (15) emittiert.

8. Verfahren zur Bestimmung der Krümmung einer Windschutzscheibe (7), wobei zumindest ein Element (7, 8, 9) einer Windschutzscheibe (7) nach dem Formprozess einem Verfahren nach einem der vorhergehenden Ansprüche unterzogen wird.

9. Verfahren zur Überwachung des Produktionsprozesses einer Windschutzscheibe (7), wobei die Krümmung zumindest eines Elements (7, 8, 9) einer Windschutzscheibe (7) zu mindestens zwei Zeitpunkten nach einem Verfahren nach einem der vorhergehenden Ansprüche bestimmt wird und die erhaltenen Krümmungsdaten vorgehalten werden und die Krümmungsdaten zur Überwachung des Produktionsprozesses miteinander korreliert werden.

## Claims

1. Method for determining the curvature of at least one glass pane (7, 8, 9),
in which the at least one glass pane (7, 8, 9) and a sensor device (1) are movable relative to each other in a direction of movement (15) and the sensor device (1) has at least three triangulation sensors (3, 17, 18), each having a light emission unit (4), which respectively emits a laser beam (6) onto the at least one glass pane (7, 8, 9), and a light detection unit (5), which detects the light scattered by the at least one glass pane (7, 8, 9), such that the triangulation sensors (3, 17, 18) record position data from the at least one glass pane (7, 8, 9) that cover the at least one glass pane (7, 8, 9) in the direction of movement (15),
wherein the triangulation sensors (3, 17, 18) have different positions in a transverse direction (2) transverse to the direction of movement (15), with an inner triangulation sensor (17) and at least two outer triangulation sensors (18) formed in the transverse direction (2) outside the inner triangulation sensor (17), **characterized in that** the outer triangulation sensors (18) record position data from in each case at least two positions in the transverse direction (2).

2. Method according to Claim 1, in which the inner triangulation sensor (17) records position data from only one position in the transverse direction (2).

3. Method according to one of the preceding claims, comprising the following steps:
i) defining a first position of the triangulation sensors (17, 18) in the transverse direction (2);
ii) relative movement between the sensor device (1) and the glass pane (7, 8, 9) in the direction of movement (15), while position data are recorded by the triangulation sensors (17, 18);
iii) setting a second position, which differs from the first position, in the transverse direction (2), at least of the outer triangulation sensors (18);
iv) relative movement between the sensor device (1) and the glass pane (7, 8, 9) in the direction of movement (15), while position data are recorded by at least the outer triangulation sensors (17, 18).

4. Method according to one of the preceding claims, in which at least one of the outer triangulation sensors (18) is moved at least temporarily in the transverse direction (2) while capturing position data.

5. Method according to one of the preceding claims, in which two or more outer triangulation sensors (18) are each formed on one side of the inner triangulation sensor (17).

6. Method according to one of the preceding claims, in which at least one of the following triangulation sensors:
a) the inner triangulation sensor (17); and
b) at least one of the outer triangulation sensors (18) records position data from a plurality of positions in the transverse direction (2) at the same time.

7. Method according to Claim 6, in which at least one of the following triangulation sensors:
a) the inner triangulation sensor (17); and
b) at least one of the outer triangulation sensors (18) is in the form of a line sensor whose light emission unit (4) emits light in a line transverse to the direction of movement (15).

8. Method for determining the curvature of a windscreen (7), wherein at least one element (7, 8, 9) of a windscreen (7) is subjected to a method according to one of the preceding claims after the moulding process.

9. Method for monitoring the production process of a windscreen (7), wherein the curvature of at least one element (7, 8, 9) of a windscreen (7) is determined at least two times according to a method according to one of the preceding claims, and the curvature data obtained are kept and the curvature data are correlated with each other for the purpose of monitoring the production process.

## Revendications

1. Procédé de détermination de la courbure d'au moins une vitre (7, 8, 9),
dans lequel l'au moins une vitre (7, 8, 9) et un dispositif de détection (1) peuvent être déplacés l'un par rapport à l'autre dans une direction de déplacement (15) et le dispositif de détection (1) comporte au moins trois capteurs de triangulation (3, 17, 18), qui comportent chacun une unité d'émission de lumière (4), qui émet chacune un rayon laser (6) sur l'au moins une vitre (7, 8, 9), et une unité de détection de lumière (5), qui détecte la lumière diffusée par l'au moins une vitre (7, 8, 9) de telle sorte que des données de position de l'au moins une vitre (7, 8, 9) sont enregistrées par les capteurs de triangulation (3, 17, 18), qui couvrent l'au moins une vitre (7, 8, 9) dans la direction de déplacement (15),
les capteurs de triangulation (3, 17, 18) présentant, dans une direction transversale (2) transversalement à la direction de déplacement (15) des positions différentes avec un capteur de triangulation (17) intérieur et comportant au moins deux capteurs de triangulation (18) extérieurs réalisés à l'extérieur du capteur de triangulation (17) intérieur dans la direction transversale (2), **caractérisé en ce que** des données de position de respectivement au moins deux positions dans la direction transversale (2) sont enregistrées par les capteurs de triangulation (18) extérieurs.

2. Procédé selon la revendication 1, dans lequel le capteur de triangulation (17) intérieur enregistre des données de position exclusivement d'une position dans la direction transversale (2).

3. Procédé selon l'une des revendications précédentes, comprenant les étapes suivantes :
i) fixation d'une première position des capteurs de triangulation (17, 18) dans la direction transversale (2) ;
ii) déplacement relatif entre le dispositif de détection (1) et la vitre (7, 8, 9) dans la direction de déplacement (15), tandis que des données de position sont enregistrées par les capteurs de triangulation (17, 18) ;
iii) réglage d'une deuxième position différente de la première position dans la direction transversale (2) au moins des capteurs de triangulation (18) extérieurs ;
iv) déplacement relatif entre le dispositif de détection (1) et la vitre (7, 8, 9) dans la direction de déplacement (15), tandis que des données de position sont enregistrées par au moins les capteurs de triangulation (17, 18) extérieurs.

4. Procédé selon l'une des revendications précédentes, dans lequel au moins un des capteurs de triangulation (18) extérieurs est déplacé au moins temporairement dans la direction transversale (2) pendant la détection de données de position.

5. Procédé selon l'une des revendications précédentes, dans lequel respectivement deux capteurs de triangulation (18) ou plus sont réalisés sur un côté d'un capteur de triangulation (17) intérieur.

6. Procédé selon l'une des revendications précédentes, dans lequel au moins un des capteurs de triangulation suivants :
a) le capteur de triangulation (17) intérieur ; et
b) au moins un des capteurs de triangulation (18) extérieurs
enregistre simultanément des données de position de plusieurs positions dans la direction transversale (2).

7. Procédé selon la revendication 6, dans lequel au moins un des capteurs de triangulation suivants :
a) le capteur de triangulation (17) intérieur ; et
b) au moins un des capteurs de triangulation (18) extérieurs
est réalisé comme un capteur linéaire, dont l'unité d'émission de lumière (4) émet de la lumière de manière linéaire transversalement à la direction de déplacement (15).

8. Procédé de détermination de la courbure d'un pare-brise (7), au moins un élément (7, 8, 9) d'un pare-brise (7) étant soumis à un procédé selon l'une des revendications précédentes après le processus de moulage.

9. Procédé de surveillance du processus de production d'un pare-brise (7), la courbure d'au moins un élément (7, 8, 9) d'un pare-brise (7) étant déterminée à au moins deux moments après un procédé selon l'une des revendications précédentes et les données de courbure obtenues étant stockées et les données de courbure étant mises en corrélation les unes avec les autres pour surveiller le processus de production.
